# EUROPÄISCHE PATENTSCHRIFT

(11) **EP 2 065 287 B1**
(45) Veröffentlichungstag und Bekanntmachung des Hinweises auf die Patenterteilung: **11.07.2012**
(21) Anmeldenummer: 08020273.2
(22) Anmeldetag: 21.11.2008
(51) Int. Cl.: B61G 9/08, B61G 11/12, F16F 9/34, F16F 9/48, F16F 9/06

(54) **Feder-Dämpfer-Einheit eines Druckstösse dämpfenden Stossreduzierelements, insbesondere für Schienenfahrzeuge**
Suspension-damper unit for an impact reduction element that dampens pressure surges
Unité ressort-amortisseur pour un élément tampon réduisant les chocs d'impact, notamment pour véhicules ferroviaires

(30) Priorität: 29.11.2007 DE 102007057574
(43) Veröffentlichungstag der Anmeldung: 03.06.2009
(73) Patentinhaber: Leben, Klaus, 82335 Berg (DE)
(72) Erfinder: Leben, Klaus, 82335 Berg (DE); Starker, Bernhard, 86987 Schwabsoien (DE)
(74) Vertreter: Möhring, Friedrich

(56) Entgegenhaltungen:
- EP-B1- 1 169 207
- EP-B1- 1 352 802
- DE-U1-202007 003 562

## Beschreibung

Die vorliegende Erfindung betrifft eine Feder-Dämpfer-Einheit eines Druckstöße dämpfenden Stoßreduzierelements, insbesondere für Schienenfahrzeuge, umfassend einen Zylinder, einen darin längs der Längsachse verschiebbar geführten Kolben, einen durch den Zylinder und den Kolben begrenzten volumenveränderlichen hydraulischen Hochdruck-Arbeitsraum, einen volumenveränderlichen Niederdruck-Überströmraum, welcher mit dem Arbeitsraum über eine kolbenstellungsabhängige Drossel verbunden ist, und eine Rückstellfeder.

Im Eisenbahnbereich kommen zum Abfangen von Aufprallstößen verbreitet - bisher landläufig als "Puffer" bezeichnete - Stoßreduzierelemente (vgl. VDI-Richtlinie 2061) zum Einsatz. Diese umfassen typischerweise kombinierte, einen Zylinder und einen darin längs dessen Achse verschiebbar geführten Kolben aufweisende Feder-Dämpfer-Einheiten, welche eine Rückstellfeder und einen hydraulischen Dämpfer dergestalt in sich vereinigen, dass der hydraulische Dämpfer, insbesondere beim zunehmenden Eindringen des Kolbens in den Zylinder, die Bewegung des Kolbens relativ zu dem Zylinder dämpft und die Rückstellfeder die anschließende Rückstellung des eingefederten Kolbens in seine Ausgangslage bewirkt. Typischerweise hat der hydraulische Dämpfer dabei eine von der Stellung des Kolbens relativ zum Zylinder abhängige Dämpfungscharakteristik, indem sich der Strömungsquerschnitt der zwischen dem hydraulischen Hochdruck-Arbeitsraum und dem Niederdruck-Überströmraum angeordneten Drossel während des Einfederns des Kolbens kolbenstellungsabhängig verändert, insbesondere bei zunehmender Einfederung abnimmt. Die Rückstellfeder kann in einem innerhalb des Kolbens angeordneten Federraum untergebracht und insbesondere als eine Gasfeder ausgeführt sein, zu welchem Zweck ein Gasraum mittels eines längs der Achse verschiebbaren Trennkolbens von dem Niederdruck-Überströmraum abgetrennt ist.

Ein entsprechender, allein dem Abfedern von Aufprallstößen dienender Puffer ist beispielsweise der DE 11180394 A1 entnehmbar. Eine vergleichbare Dämpfungsvorrichtung ist auch aus der DE 2015016 A1 bekannt. Und auch die EP 1352802 B1 offenbart eine derartige, eine hydraulische Dämpfeinrichtung und eine Gasfeder in sich vereinigende Einheit, die in diesem Falle als Dämpferpatrone ausgeführt ist, welche dergestalt in einer Mittelpufferkupplungsanordnung integriert ist, dass mittels einer die Dämpferpatrone umgebenden Ringfederanordnung auch Zugstöße abgefangen werden können.

Besonderes Augenmerk wurde in der Praxis bisher darauf gerichtet, das Verhalten gattungsgemäßer Feder-Dämpfer-Einheiten bei mit großer Wucht erfolgenden Aufprall-Belastungen zu verbessern. In diesem Sinne zeigen die EP 1169207 B1 und die DE 202007003562 U1 dem Abfangen von Aufprallstößen dienende gattungsgemäße Feder-Dämpfer-Einheiten, die zusätzlich zu der den Hochdruck-Arbeitsraum mit dem Niederdruck-Überströmraum verbindenden kolbenstellungsabhängigen Drossel zu dieser parallel geschaltet eine Überdruck-Ventileinheit aufweisen, welche jeweils der Beschädigung des Puffers bei einem Aufprallstoß mit einer außerhalb des Auslegungsbereichs liegenden Wucht vorbeugen soll. Wenig beachtet wurden indessen bisher die bei relativ niedrigen Geschwindigkeiten, z.B. im Rangierbetrieb, auftretenden Verhältnisse, die durch eher geringe dynamische Belastungen bei mitunter allerdings durchaus hohen statischen Belastungen geprägt sind.

Die vorliegende Erfindung zielt darauf ab, eine Feder-Dämpfer-Einheit der eingangs genannten Art dergestalt weiterzuentwickeln, dass sie den in der praktischen Anwendung bei Schienenfahrzeugen bei geringen Geschwindigkeiten auftretenden Belastungen in besonderer Weise gerecht wird.

Gelöst wird die vorstehend dargelegte Aufgabenstellung, indem bei einer Feder-Dämpfer-Einheit der gattungsgemäßen Art mindestens ein Vorspannventil vorgesehen und mit der kolbenstellungsabhängigen Drossel derart strömungstechnisch in Reihe geschaltet ist, dass sämtliche die kolbenstellungsabhängige Drossel vom Arbeitsraum zum Überströmraum durchströmende Hydraulikflüssigkeit auch mindestens ein Vorspannventil durchströmt, wobei das mindestens eine Vorspannventil erst bei Erreichen bzw. Überschreiten einer vorgegebenen Mindestdruckdifferenz zwischen seiner dem Hochdruck-Arbeitsraum zugeordneten Hochdruckseite und der dem Niederdruck-Überströmraum zugeordneten Niederdruckseite öffnet. Erreicht wird auf diese Weise, dass sich das Ansprechverhalten der Feder-Dämpfer-Einheit im Falle besonders ausgeprägter statischer Belastungen bei vergleichsweise geringen dynamischen Belastungen gezielt in Richtung einer Heraufsetzung der Belastungsschwelle modifizieren lässt, und zwar ohne hierzu auf die Charakteristik der Rückstellfeder Einfluss nehmen zu müssen. Letztere kann somit gezielt auf die bei starken dynamischen Belastungen, d.h. bei mit hoher Wucht erfolgenden Aufprallen erforderlichen Anforderungen ausgelegt werden. Insbesondere lässt sich in Anwendung der vorliegenden Erfindung vermeiden, die Rückstellfeder, nur um ein Einfedern der Feder-Dämpfer-Einheit im Rangier- bzw. Schiebebetrieb zu verhindern, erheblich (bis zu 10-fach) stärker vorgespannt wird, als es für die Dämpfungscharakteristik bei dynamischen Belastungen ideal wäre; ein Übersteuern bei dynamischen Belastungszuständen wird hierdurch verhindert. Ebensowenig bedarf die erfindungsgemäße Feder-Dämpfer-Einheit eines Übersetzers, dessen Integration in eine Feder-Dämpfer-Einheit mit einem erheblichen Aufwand verbunden ist. Trotz ihres vergleichsweise einfachen Aufbaus zeichnet sich die erfindungsgemäße Feder-Dämpfer-Einheit somit durch ein für den praktischen Einsatz in Schienenfahrzeugen besonders günstiges, bisher nicht bekanntes Funktionsverhalten aus, indem sie bei stark unterschiedlichen Beanspruchungsprofilen sehr gute Reaktionseigenschaften zeigt.

Gemäß einer ersten bevorzugten Weiterbildung der Erfindung ist vorgesehen, dass das Vorspannventil ausschließlich in Richtung vom Arbeitsraum zum Überströmraum durchströmbar ist, wobei für die Rückströmung vom Überströmraum zum Arbeitsraum mindestens ein allein in dieser Richtung durchströmbares gesondertes Rückströmventil vorgesehen ist. Auf diese Weise lässt sich zum einen das mindestens eine Vorspannventil baulich besonders einfach gestalten. Zudem kann hierdurch gezielt und unabhängig von der Charakteristik des Vorspannventils Einfluss genommen werden auf die Funktionsweise der Feder-Dämpfer-Einheit beim Ausfedern. In diesem Zusammenhang kann es von besonderem Vorteil sein, wenn das mindestens eine Rückströmventil, gemäß einer weiteren bevorzugten Ausführungsform der Erfindung, derart angeordnet ist, dass sämtliche dieses in Richtung vom Überströmraum zum Arbeitsraum durchströmende Hydraulikflüssigkeit auch die kolbenstellungsabhängige Drossel durchströmt.

Gemäß einer anderen bevorzugten Weiterbildung sind mehrere autonome Vorspannventile vorgesehen, die namentlich mehr oder weniger gleichmäßig um die kolbenstellungsabhängige Drossel herum angeordnet sein können. Die besonderen Vorteile dieser Weiterbildung ergeben sich aus einem für typische Anwendungsfälle besonders günstigen Verhältnis zwischen der ein Ansprechen der Vorspannventile auslösenden Drucksituation einerseits und dem bei geöffneten Vorspannventilen für das Durchströmen des Dämpffluids durch diese hindurch zur Verfügung stehenden Strömungsquerschnitts andererseits. Und auch im Hinblick auf einen besonders kompakten Aufbau der Feder-Dämpfer-Einheit ist dies günstig.

Im Sinne der weiter oben bereits angesprochenen Zielsetzung eines besonders einfachen Aufbaus der Feder-Dämpfer-Einheit bei gleichzeitig hoher Zuverlässigkeit und Reproduzierbarkeit der Betriebscharakteristik ist von Vorteil, wenn das mindestens eine Vorspannventil einen in einer zylindrischen Führung verschiebbar geführten Ventilkolben aufweist, der mittels einer Schraubenfeder gegen einen Sitz vorgespannt ist, der die Mündung einer (typischerweise mittelbar, d.h. über die kolbenstellungsabhängige Drossel) mit dem Hochdruck-Arbeitsraum kommunizierenden Hochdruck-Bohrung umgibt.

Gemäß einer wiederum anderen bevorzugten Weiterbildung der Erfindung ist vorgesehen, dass das mindestes eine Vorspannventil in einem Kolbenboden des als Hohlkolben ausgeführten Kolbens angeordnet ist. In dem Hohlkolben kann neben dem Niederdruck-Überströmraum ein Federraum, insbesondere ein Gasraum, untergebracht sein. Bei dem Kolbenboden, in dem das mindestens eine Vorspannventil untergebracht ist, handelt es sich dabei zweckmäßigerweise um ein gesondertes Bauteil, welches mit der Kolbenwand des Hohlkolbens verschraubt ist. Besonders günstig ist es, wenn das mindestens eine Vorspannventil in einem zentralen Ansatz des Kolbenbodens angeordnet ist, wobei der Ansatz unter Ausbildung eines durch seine Umfangswand und die Innenfläche der Kolbenwand begrenzten ringförmigen Bereichs des Überströmraums in die Kolbenwand des Hohlkolbens hineinragt und das mindestens eine Vorspannventil niederdruckseitig mit dem ringförmigen Bereich des Überströmraums kommuniziert. Eine solche Gestaltung zeichnet sich insbesondere durch besonders kompakte Abmessungen aus.

Eine nochmals andere bevorzugte Weiterbildung der Erfindung ist dadurch gekennzeichnet, dass die Rückstellfeder innerhalb des Kolbens in einem von dem Niederdruck-Überströmraum mittels eines längs der Längsachse verschiebbaren Trennkolbens abgetrennten Federraum angeordnet ist. Besonders bevorzugt umfasst sie einen in dem Kolben angeordneten volumenveränderlichen Gasraum, der von dem Überströmraum durch einen längs der Längsachse verschiebbaren Trennkolben abgetrennt ist.

In nochmals anderer Weiterbildung der Erfindung umfasst die Feder-Dämpfer-Einheit mindestens ein zwischen den Arbeitsraum und den Überströmraum zu der kolbenstellungsabhängigen Drossel parallel geschaltetes Überdruckventil, welches erst bei Erreichen bzw. Überschreiten einer vorgegebenen zweiten Mindestdruckdifferenz zwischen seiner dem Hochdruck-Arbeitsraum zugeordneten Hochdruckseite und der dem Niederdruck-Überströmraum zugeordneten Niederdruckseite öffnet, wobei die zweite Mindestdruckdifferenz größer ist als die für das Öffnen des mindestens einen Vorspannventils geltende erste Mindestdruckdifferenz. Eine solche Kombination mindestens eines zu der kolbenstellungsabhängigen Drossel parallel geschalteten Überdruckventils mit mindestens einem zu der kolbenstellungsabhängigen Drossel in Reihe geschalteten Vorspannventil lässt zu, dass im Sinne der weiter oben erläuterten Aspekte das Ansprechverhalten der Feder-Dämpfer-Einheit gezielt in Richtung einer Erhöhung der für statische Beanspruchungen maßgeblichen Belastungsschwelle modifiziert wird, ohne dass hierdurch die Gefahr einer Zerstörung der Einheit im Falle extremer dynamischer Belastungen zunimmt.

Es können mehrere autonome Überdruckventile vorgesehen sein, welche um die kolbenstellungsabhängige Drossel herum angeordnet sind und jeweils einen in einer zylindrischen Führung verschiebbar geführten Ventilkolben aufweisen können, der mittels einer Schraubenfeder gegen einen Sitz vorgespannt ist, der die Mündung einer mit dem Hochdruck-Arbeitsraum kommunizierenden Hochdruck-Bohrung umgibt. Das Ansprechverhalten der Überdruckventile lässt sich hierdurch besonders genau vorgeben. Dementsprechend läßt sich in Anwendung dieser Weiterbildung erreichen, dass die Überdruck-Ventileinheit (erst) exakt dann öffnet, wenn die aus einem Aufprallstoß resultierende Belastung der Feder-Dämpfer-Einheit den Auslegungsbereich verläßt. Auch die durch die Vielzahl parallel arbeitender autonomer Überdruckventile bereitgestellte Redundanz des Systems wirkt sich im Sinne einer erhöhten Zuverlässigkeit der Feder-Dämpfer-Einheit aus.

Für die Gestaltung und Anordnung des mindestens einen Überdruckventils gelten vergleichbare Gesichtspunkte, wie sie weiter oben für das Vorspannventil dargelegt wurden. So kann insbesondere jedes Überdruckventil - bevorzugt sind mehrere Überdruckventile in paralleler Anordnung vorgesehen - eine mit dem Niederdruck-Überströmraum kommunizierende Niederdruck-Bohrung umfassen, die im Bereich der Stirnseite des zugeordneten Ventilkolbens in die zugeordnete Führung mündet. Weiterhin ist es günstig, wenn die Überdruckventile in einem Kolbenboden des als Hohlkolben ausgeführten Kolbens angeordnet sind. Und auch die Überdruckventile können vorteilhafterweise in einem zentralen Ansatz des Kolbenbodens angeordnet sein, wobei der Ansatz unter Ausbildung eines durch seine Umfangswand und die Innenfläche der Kolbenwand begrenzten ringförmigen Bereichs des Überströmraums in die Kolbenwand des Hohlkolbens hineinragt und eine dem mindestens einen Überdruckventil zugeordnete Niederdruck-Bohrung in den ringförmigen Bereich des Überströmraums mündet.

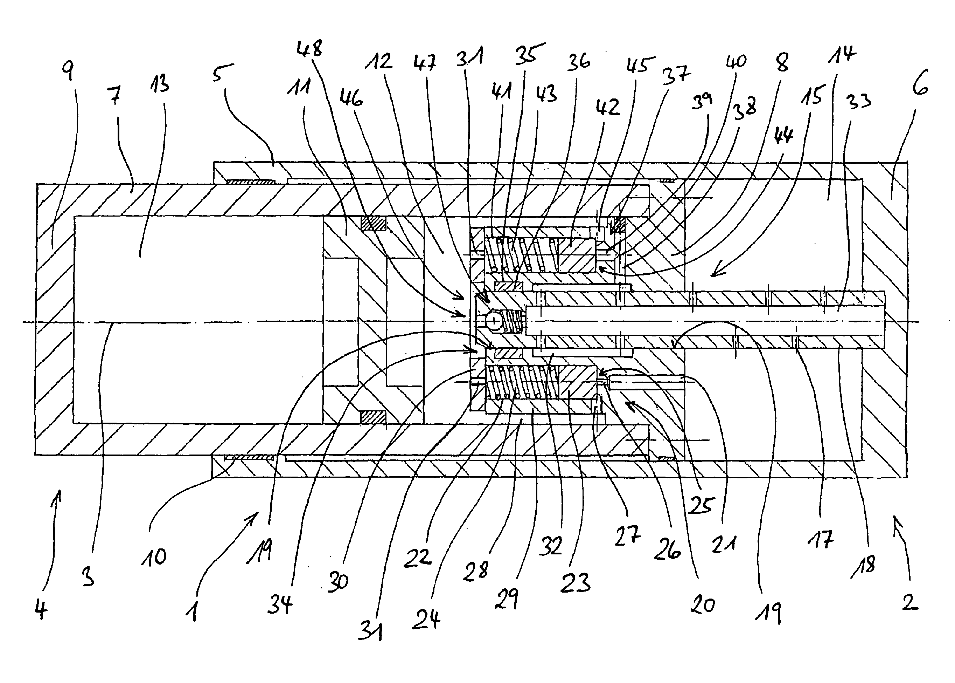

Im Folgenden wird die vorliegende Erfindung anhand eines in der Zeichnung veranschaulichten bevorzugten Ausführungsbeispiels näher erläutert. Diese zeigt einen Axialschnitt durch eine als Dämpferpatrone ausgeführte Feder-Dämpfer-Einheit nach der vorliegenden Erfindung.

Die in der Zeichnung abgebildete, als Bestandteil eines Stoßreduzierelements (Druckpuffers) für Schienenfahrzeuge ausgelegte Pufferpatrone 1 umfaßt als die beiden Hauptkomponenten einen Zylinder 2 und einen darin längs der Längsachse 3 verschiebbar geführten Kolben 4. Der Zylinder 2 weist eine Zylinderwand 5 und einen Zylinderboden 6 auf. Der Kolben 4 ist als Hohlkolben ausgeführt; er weist eine Kolbenwand 7, einen inneren Kolbenboden 8 und einen äußeren Kolbenboden 9 auf. Die Außenfläche der Kolbenwand 7 und die Innenfläche der Zylinderwand 5 sind in als solches bekannter Weise über mindestens eine Ringdichtung 10 gegeneinander abgedichtet.

Der Kolben 4 beherbergt zwei durch einen längs der Längsachse 3 verschiebbaren, gegenüber der Innenfläche der Kolbenwand 7 gedichteten Trennkolben 11 voneinander abgetrennte Funktionsräume, nämlich einen volumenveränderlichen Niederdruck-Überströmraum 12 und einen ebenfalls volumenveränderlichen Gasraum 13. Der Überströmraum 12 ist mit einem durch den Zylinder 2 und den Kolben 4 begrenzten volumenveränderlichen hydraulischen Hochdruck-Arbeitsraum 14 strömungstechnisch verbunden, und zwar über eine kolbenstellungsabhängige Drossel 15 und mehrere zu dieser parallel geschaltete, autonome Überdruckventile 20. Die kolbenstellungsabhängige Drossel 15 umfaßt dabei ein an dem Zylinderboden 6 angebrachtes, mehrere Drosselbohrungen 17 aufweisendes Steuerrohr 18, welches in eine Bohrung 19 des inneren Kolbenbodens 8 eintaucht.

Die Überdruckventile 20 sind gleichmäßig um die kolbenstellungsabhängige Drossel 15 herum angeordnet. Sie weisen jeweils eine in dem inneren Kolbenboden 8 angeordnete, im wesentlichen axiale, mit dem hydraulischen Hochdruck-Arbeitsraum 14 kommunizierende Hochdruck-Bohrung 21 auf, die in einer ebenfalls in dem inneren Kolbenboden 8 angeordneten zylindrischen Führung 22 mündet. In der Führung 22 ist ein Ventilkolben 23 verschiebbar geführt, der mittels einer - ebenfalls in der Führung 22 aufgenommenen - Schraubenfeder 24 gegen einen Ventilsitz 25 vorgespannt ist, welcher die Mündung 26 der Hochdruck-Bohrung 21 in der Führung 22 umgibt. Die Hochdruck-Bohrung 21 ist jeweils als Stufenbohrung ausgeführt mit einem gegenüber dem Durchmesser im übrigen reduzierten Durchmesser im Bereich der Mündung 26.

Jedes Überdruckventil 20 umfaßt weiterhin eine im wesentlichen radiale Niederdruck-Bohrung 27. Diese kommuniziert mit einem ringförmigen Bereich 28 des Niederdruck-Überströmraums 12, der zwischen der Innenfläche der Kolbenwand 7 und der Außenfläche eines in die Kolbenwand hineinragenden Ansatzes 29 des inneren Kolbenbodens 8 gebildet ist, und mündet in die zugeordnete Führung 22 im Bereich der Stirnseite des zugeordneten Ventilkolbens 23 (in dessen an dem Sitz 25 anliegender, das Überdruckventil 20 verschließender Stellung).

An ihren dem jeweils zugeordneten Ventilkolben 23 gegenüberliegenden Enden stützen sich die Schraubenfedern 24 an einer Scheibe 30 ab, die stirnseitig mit dem Ansatz 29 des inneren Kolbenbodens 8 verschraubt ist. Die Scheibe weist im Bereich jeder der Führungen 22 eine Ausgleichsbohrung 31 auf.

In dem vorstehend dargelegten Umfang entspricht die Pufferpatrone nach der Zeichnung dem als bekannt vorauszusetzenden Stand der Technik (vgl. DE 202007003562 U1), so daß es weiterer Erläuterungen nicht bedarf.

Im Bereich des Ansatzes 29 bildet die Bohrung 19 des inneren Kolbenbodens 8 eine das Steuerohr 18 ringförmig umgebende Kammer 32 aus. Deren axiale Länge ist so bemessen, dass sie in jeder Stellung des Kolbens 4 relativ zum Zylinder 2 über mindestens eine Drosselbohrung 17 mit dem Innenraum 33 des Steuerrohres 18 kommuniziert. Zum stirnseitigen Ende 34 des Ansatzes 29 hin ist die Kammer 32 durch eine Anlage des betreffenden Abschnitts der Bohrung 19 an der Außenfläche des Steuerohres 18 dichtend verschlossen, wozu die dort in eine Nut 35 der Bohrung 19 eingelegte Dichtung 36 beiträgt.

Gleichmäßig um die Bohrung 19 herum sind in dem Kolbenboden 8 mehrere Vorspannventile 37 angeordnet. Diese weisen jeweils eine mit der Kammer 32 kommunizierende, einen radialen Abschnitt 38 und einen axialen Abschnitt 39 umfassende Hochdruck-Bohrung 40 auf. Der axiale Abschnitt 39 mündet dabei in einer ebenfalls in dem inneren Kolbenboden 8 angeordneten zylindrischen Führung 41. In der Führung 41 ist ein Ventilkolben 42 verschiebbar geführt, der mittels einer - ebenfalls in der Führung 41 aufgenommenen - Schraubenfeder 43 gegen einen Ventilsitz 44 vorgespannt ist, welcher die Mündung der Hochdruck-Bohrung 40 in der Führung 41 umgibt.

Jedes Vorspannventil 37 umfaßt weiterhin eine im wesentlichen radiale Niederdruck-Bohrung 45. Diese kommuniziert mit dem ringförmigen Bereich 28 des Niederdruck-Überströmraums 12 und mündet in die zugeordnete Führung 41 im Bereich der Stirnseite des zugeordneten Ventilkolbens 42 (in dessen an dem Ventilsitz 44 anliegender, das Vorspannventil 37 verschließender Stellung).

An ihren dem jeweils zugeordneten Ventilkolben 42 gegenüberliegenden Enden stützen sich die Schraubenfedern 43 an der Scheibe 30 ab, die auch im Bereich jeder der Führungen 41 eine Ausgleichsbohrung 31 aufweist. Erkennbar kann bei einem Einfedern der Feder-Dämpfer-Einheit aus der in der Zeichnung dargestellten vollkommen ausgefederten Stellung heraus Hydraulikflüssigkeit durch die kolbenstellungsabhängige Drossel 15 hindurch vom Hochdruck-Arbeitsraum 14 in den Niederdruck-Überströmraum 12 nur dann gelangen, wenn die Druckdifferenz zwischen der Hochdruckseite und der Niederdruckseite der mit der kolbenstellungsabhängigen Drossel 15 in Reihe geschalteten Vorspannventile 37 groß genug ist, um diese zu öffnen. Nicht relevant ist, dass ab einem gewissen Grad des Einfederns der Feder-Dämpfer-Einheit, nämlich sobald die dem freien Ende des Steuerrohres 18 am nächsten liegende Drosselbohrung 17 direkt mit dem Niederdruck-Überströmraum 12 kommuniziert, Hydraulikflüssigkeit auch unter Umgehung der Vorspannventile 37 vom Hochdruck-Arbeitsraum 14 in den Niederdruck-Überströmraum 12 gelangen kann, da dies für die vorliegend interessierende Einflussnahme auf die für ein Einfedern des vollkommen ausgefederten Feder-Dämpfer-Einheit erforderliche "Losbrechkraft" unerheblich ist.

Im Bereich des stirnseitigen Endes 46 des Steuerrohres 18 weist dieses ein Rückschlagventil 47 auf. Dieses hat die Funktion eines Rückströmventils 48, indem - beim Ausfedern des Kolbens 4 aus dem Zylinder 2 heraus - Hydraulikflüssigkeit ausschließlich über das Rückschlagventil 47 (und anschließend durch die kolbenstellungsabhängige Drossel 15 hindurch) aus dem Niederdruck-Überströmraum 12 in den Hochdruck-Arbeitsraum 14 gelangen kann. Eine direkte, die Vorspannventile 37 umgehende Durchströmung des Rückschlagventils 47 vom Innenraum 33 des Steuerrohres 18 her in den Niederdruck-Überströmraum hinein ist indessen ausgeschlossen.

## Patentansprüche

1. Feder-Dämpfer-Einheit eines Druckstöße dämpfenden Stoßreduzierelements, insbesondere für Schienenfahrzeuge, umfassend einen Zylinder (2), einen darin längs der Längsachse (3) verschiebbar geführten Kolben (4), einen durch den Zylinder und den Kolben begrenzten volumenveränderlichen hydraulischen Hochdruck-Arbeitsraum (14), einen volumenveränderlichen Niederdruck-Überströmraum (12), welcher mit dem Hochdruck-Arbeitsraum über eine kolbenstellungsabhängige Drossel (15) verbunden ist, und eine Rückstellfeder,
**dadurch gekennzeichnet,**
**dass** mindestens ein Vorspannventil (37) vorgesehen und mit der kolbenstellungsabhängigen Drossel (15) derart strömungstechnisch in Reihe geschaltet ist, dass sämtliche die kolbenstellungsabhängige Drossel vom Hochdruck-Arbeitsraum (14) zum Niederdruck-Überströmraum (12) durchströmende Hydraulikflüssigkeit auch mindestens ein Vorspannventil (37) durchströmt, wobei das mindestens eine Vorspannventil erst bei Erreichen bzw. Überschreiten einer vorgegebenen Mindestdruckdifferenz zwischen seiner dem Hochdruck-Arbeitsraum zugeordneten Hochdruckseite und seiner dem Niederdruck-Überströmraum zugeordneten Niederdruckseite öffnet.

2. Feder-Dämpfer-Einheit nach Anspruch 1,
**dadurch gekennzeichnet,**
**dass** das mindestens eine Vorspannventil (37) ausschließlich in Richtung vom Hochdruck-Arbeitsraum (14) zum Niederdruck-Überströmraum (12) durchströmbar ist, wobei für die Rückströmung vom Niederdruck-Überströmraum zum Hochdruck-Arbeitsraum mindestens ein Rückströmventil (48) vorgesehen ist.

3. Feder-Dämpfer-Einheit nach Anspruch 2,
**dadurch gekennzeichnet,**
**dass** das mindestens eine Rückströmventil (48) derart angeordnet ist, dass sämtliche dieses in Richtung vom Niederdruck-Überströmraum (12) zum Hochdruck-Arbeitsraum (14) durchströmende Hydraulikflüssigkeit auch die kolbenstellungsabhängige Drossel (15) durchströmt.

4. Feder-Dämpfer-Einheit nach einem der Ansprüche 1 bis 3,
**dadurch gekennzeichnet,**
**dass** das mindestens eine Vorspannventil (37) einen in einer zylindrischen Führung (41) verschiebbar geführten Ventilkolben (42) aufweist, der mittels einer Schraubenfeder (43) gegen einen die Mündung einer Hochdruck-Bohrung (40) umgebenden Ventilsitz (44) vorgespannt ist.

5. Feder-Dämpfer-Einheit nach einem der Ansprüche 1 bis 4,
**dadurch gekennzeichnet,**
**dass** das mindestens eine Vorspannventil (37) in einem Kolbenboden (8) des als Hohlkolben ausgeführten Kolbens (4) angeordnet ist.

6. Feder-Dämpfer-Einheit nach Anspruch 5,
**dadurch gekennzeichnet,**
**dass** das mindestens eine Vorspannventil (37) in einem zentralen Ansatz (29) des Kolbenbodens (8) angeordnet ist, wobei der Ansatz unter Ausbildung eines durch seine Umfangswand und die Innenfläche der Kolbenwand begrenzten ringförmigen Bereichs (28) des Niederdruck-Überströmraums (12) in die Kolbenwand des Hohlkolbens hineinragt und die Niederdruckseite des Vorspannventils mit dem ringförmigen Bereichs des Überströmraums kommuniziert.

7. Feder-Dämpfer-Einheit nach Anspruch 5 oder Anspruch 6,
**dadurch gekennzeichnet,**
**dass** das mindestens eine Vorspannventil (37) hochdruckseitig mit einer Kammer (32) kommuniziert, welche in dem Ansatz (29) des Kolbenbodens (8) ausgeführt ist, eine Erweiterung einer den Kolbenboden durchsetzenden Bohrung (19) darstellt und ein in der Bohrung aufgenommenes Steuerrohr (18) ringförmig umgibt.

8. Feder-Dämpfer-Einheit nach einem der Ansprüche 1 bis 7,
**dadurch gekennzeichnet,**
**dass** die Rückstellfeder innerhalb des Kolbens (4) in einem von dem Niederdruck-Überströmraum (12) mittels eines längs der Längsachse (3) verschiebbaren Trennkolbens (11) abgetrennten Federraum angeordnet ist.

9. Feder-Dämpfer-Einheit nach einem der Ansprüche 1 bis 8,
**dadurch gekennzeichnet,**
**dass** sie mindestens ein zwischen den Hochdruck-Arbeitsraum (14) und den Niederdruck-Überströmraum (12) zu der kolbenstellungsabhängigen Drossel (15) parallel geschaltetes Überdruckventil (20) umfasst, welches erst bei Erreichen bzw. Überschreiten einer vorgegebenen zweiten Mindestdruckdifferenz zwischen seiner dem Hochdruck-Arbeitsraum (14) zugeordneten Hochdruckseite und der dem Niederdruck-Überströmraum (12) zugeordneten Niederdruckseite öffnet, wobei die zweite Mindestdruckdifferenz größer ist als die für das Öffnen des mindestens einen Vorspannventils (37) geltende erste Mindestdruckdifferenz.

10. Feder-Dämpfer-Einheit nach Anspruch 9,
**dadurch gekennzeichnet,**
**dass** mehrere autonome Überdruckventile (20) vorgesehen sind, welche um die kolbenstellungsabhängige Drossel (15) herum angeordnet sind und jeweils einen in einer zylindrischen Führung (22) verschiebbar geführten Ventilkolben (23) aufweisen, der mittels einer Schraubenfeder (24) gegen einen die Mündung (26) einer mit dem Hochdruck-Arbeitsraum (14) kommunizierenden Hochdruck-Bohrung (21) umgebenden Sitz (25) vorgespannt ist.

11. Feder-Dämpfer-Einheit nach Anspruch 10,
**dadurch gekennzeichnet,**
**dass** die dem mindestens einen Überdruckventil zugeordnete Hochdruck-Bohrung (21) im Bereich ihrer Mündung (26) in die Führung (22) einen geringeren Durchmesser aufweisen als auf ihrer übrigen Länge.

12. Feder-Dämpfer-Einheit nach einem der Ansprüche 9 bis 11,
**dadurch gekennzeichnet,**
**dass** dem mindestens einen Überdruckventil (20) eine mit dem Niederdruck-Überströmraum (12) kommunizierende Niederdruck-Bohrung (27) zugeordnet ist, die im Bereich der Stirnseite des zugeordneten Ventilkolbens (23) in die zugeordnete Führung (22) mündet.

13. Feder-Dämpfer-Einheit nach einem der Ansprüche 9 bis 12,
**dadurch gekennzeichnet,**
**dass** das mindestens eine Überdruckventil (20) in einem Kolbenboden (8) des als Hohlkolben ausgeführten Kolbens (4) angeordnet ist.

14. Feder-Dämpfer-Einheit nach einem der Ansprüche 9 bis 13,
**dadurch gekennzeichnet,**
**dass** das mindestens eine Überdruckventil (20) in einem zentralen Ansatz (29) eines Kolbenbodens (8) angeordnet ist.

## Claims

1. A spring-damper unit of a shock reducing element that absorbs compressive shocks, particularly for rail vehicles, comprising a cylinder (2), a piston (4) that is displaceably guided in said cylinder along the longitudinal axis (3), a hydraulic high-pressure working chamber (14) with variable volume that is defined by the cylinder and the piston, a low-pressure overflow chamber (12) with variable volume that is connected to the high-pressure working chamber via a piston position-dependent throttle (15) and a return spring,
**characterized in that** at least one counterbalance valve (37) is provided and fluidically connected in series to the piston position-dependent throttle (15) in such a way that the entire hydraulic fluid flowing through the piston position-dependent throttle from the working chamber (14) to the overflow chamber (12) also flows through at least one counterbalance valve (37), wherein the at least one counterbalance valve does not open before a predetermined minimum pressure differential between its high-pressure side assigned to the high-pressure working chamber and its low-pressure side assigned to the low-pressure overflow chamber is respectively reached or exceeded.

2. The spring-damper unit according to Claim 1,
**characterized in**
**that** fluid can only flow through the at least one counterbalance valve (37) in the direction from the high-pressure working chamber (14) to the low-pressure overflow chamber (12), wherein at least one backflow check valve (48) is provided for the backflow from the low-pressure overflow chamber to the high-pressure working chamber.

3. The spring-damper unit according to Claim 2,
**characterized in**
**that** the at least one backflow check valve (48) is arranged in such a way that the entire hydraulic fluid flowing through this backflow check valve in the direction from the low-pressure overflow chamber (12) to the high-pressure working chamber (14) also flows through the piston position-dependent throttle (15).

4. The spring-damper unit according to one of Claims 1 to 3,
**characterized in**
**that** the at least one counterbalance valve (37) features a valve piston (42) that is displaceably guided in a cylindrical guide (41) and pre-loaded against a valve seat (44) surrounding the opening of a high-pressure bore (40) by means of a coil spring (43).

5. The spring-damper unit according to one of Claims 1 to 4,
**characterized in**
**that** the at least one counterbalance valve (37) is arranged in a piston head (8) of the piston (4) realized in the form of a tubular piston.

6. The spring-damper unit according to Claim 5,
**characterized in**
**that** the at least one counterbalance valve (37) is arranged in a central extension (29) of the piston head (8), wherein said extension protrudes into the piston wall of the tubular piston and forms an annular region (28) of the low-pressure overflow chamber (12) that is defined by its peripheral wall and the inner surface of the piston wall, and wherein the low-pressure side of the counterbalance valve communicates with the annular region of the overflow chamber.

7. The spring-damper unit according to Claim 5 or Claim 6,
**characterized in**
**that** the high-pressure side of the at least one counterbalance valve (37) communicates with a chamber (32) that is realized in the extension (29) of the piston head (8), represents an expansion of a bore (19) extending through the piston head and annularly surrounds a control tube (18) accommodated in the bore.

8. The spring-damper unit according to one of Claims 1 to 7,
**characterized in**
**that** the return spring is arranged within the piston (4) in a spring chamber that is separated from the low-pressure overflow chamber (12) by means of a separator piston (11) that can be displaced along the longitudinal axis (3).

9. The spring-damper unit according to one of Claims 1 to 8,
**characterized in**
**that** it comprises at least one pressure control valve (20) that is arranged between the high-pressure working chamber (14) and the low-pressure overflow chamber (12) and connected in parallel to the piston position-dependent throttle (15), wherein said pressure control valve does not open before a predetermined second minimum pressure differential between its high-pressure side assigned to the high-pressure working chamber (14) and the low-pressure side assigned to the low-pressure overflow chamber (12) is respectively reached or exceeded, and wherein the second minimum pressure differential is greater than the first minimum pressure differential for opening the at least one counterbalance valve (37).

10. The spring-damper unit according to Claim 9,
**characterized in**
**that** several autonomous pressure control valves (20) are provided and arranged around the piston position-dependent throttle (15), wherein said pressure control valves respectively feature a valve piston (23) that is displaceably guided in a cylindrical guide (22) and pre-loaded against a seat (25) surrounding the opening (26) of a high-pressure bore (21) that communicates with the high-pressure working chamber (14) by means of a coil spring (24).

11. The spring-damper unit according to Claim 10,
**characterized in**
**that** the high-pressure bore (21) assigned to the at least one pressure control valve has a smaller diameter in the region of its opening (26) in the guide (22) than over its remaining length.

12. The spring-damper unit according to one of Claims 9 to 11,
**characterized in**
**that** a low-pressure bore (27) is assigned to the at least one pressure control valve (20) and communicates with the low-pressure overflow chamber (12), wherein said low-pressure bore leads into the assigned guide (22) in the region of the face of the assigned valve piston (23).

13. The spring-damper unit according to one of Claims 9 to 12,
**characterized in**
**that** the at least one pressure control valve (20) is arranged in a piston head (8) of the piston (4) realized in the form of a tubular piston.

14. The spring-damper unit according to one of Claims 9 to 13,
**characterized in**
**that** the at least one pressure control valve (20) is arranged in a central extension (29) of a piston head (8).

## Revendications

1. Unité d'amortissement à ressort d'un élément réducteur de chocs amortissant les chocs de pression, en particulier pour véhicules ferroviaires, comprenant un cylindre (2), un piston (4) guidé dedans et déplaçable le long de l'axe longitudinal (3), un espace opérationnel (14) hydraulique à haute pression à volume variable limité par le cylindre et le piston, un espace de trop-plein (12) à basse pression à volume variable qui est relié par un restricteur (15) dépendant de la position du piston à l'espace opérationnel à haute pression et un ressort de rappel, **caractérisée en ce**
**qu'**au moins une soupape de précontrainte (37) est prévue et commutée en série avec le restricteur (15) dépendant de la position du piston, que tout le liquide hydraulique traversant le restricteur (15) dépendant de la position du piston de l'espace opérationnel à haute pression (14) vers l'espace de trop-plein à basse pression (12) traverse aussi au moins une soupape de précontrainte (37), l'au moins une soupape de précontrainte (37) ne s'ouvrant qu'une fois qu'est atteinte ou dépassée une différence prescrite entre son niveau haute pression associé à l'espace opérationnel à haute pression et son niveau basse pression associé à l'espace de trop-plein à basse pression.

2. Unité d'amortissement à ressort selon la revendication 1,
**caractérisée en ce que**
l'au moins une soupape de précontrainte (37) peut être traversée exclusivement en direction de l'espace opérationnel à haute pression (14) vers l'espace de trop-plein à basse pression (12), au moins une soupape de reflux (48) étant prévue pour le reflux de l'espace de trop-plein vers l'espace opérationnel à haute pression.

3. Unité d'amortissement à ressort selon la revendication 2,
**caractérisée en ce**
**qu'**au moins une soupape de reflux (48) est disposée de manière à ce que tout le liquide hydraulique la traversant en direction de l'espace de trop-plein à basse pression (12) vers l'espace opérationnel à haute pression (14) traverse aussi le restricteur (15) dépendant de la position du piston.

4. Unité d'amortissement à ressort selon une des revendications 1 à 3,
**caractérisée en ce**
**qu'**au moins une soupape de précontrainte (37) présente un piston de soupape (42) guidé de manière mobile dans un guide cylindrique (41) et qui est précontraint au moyen d'un ressort à boudin (43) contre un siège de soupape (44) entourant l'embouchure d'un alésage haute pression (40).

5. Unité d'amortissement à ressort selon une des revendications 1 à 4,
**caractérisée en ce**
**qu'**au moins une soupape de précontrainte (37) est disposée dans un fond de piston (8) du piston (4) se présentant sous forme d'un piston creux.

6. Unité d'amortissement à ressort selon la revendication 5,
**caractérisée en ce**
**qu'**au moins une soupape de précontrainte (37) est disposée dans une pièce rapportée centrale (29) du fond du piston (8), la pièce rapportée dépassant en formant une zone de forme annulaire (28) de l'espace de trop-plein à basse pression (12) limitée par sa paroi circonférentielle et la surface intérieure de la paroi du piston dans la paroi de piston du piston creux et le niveau basse pression de la soupape de précontrainte communiquant avec la zone de forme annulaire de l'espace de trop-plein.

7. Unité d'amortissement à ressort selon la revendication 5 ou 6,
**caractérisée en ce**
**qu'**au moins une soupape de précontrainte (37) communique au niveau haute pression avec une chambre (32) qui est réalisée dans la pièce rapportée (29) du fond du piston (8), constitue une extension d'un alésage (19) perçant le fond du piston et entoure en forme d'anneau un tuyau de commande (18) reçu dans l'alésage.

8. Unité d'amortissement à ressort selon une des revendications 1 à 7,
**caractérisée en ce que**
le ressort de rappel est disposé dans le piston (4) dans un espace de ressort séparé de l'espace de trop-plein à basse pression (12) par un piston séparateur (11) déplaçable le long de l'axe longitudinal (3).

9. Unité d'amortissement à ressort selon une des revendications 1 à 8,
**caractérisée en ce**
**qu'**elle comprend au moins une soupape de trop-plein (20) commutée parallèlement entre l'espace opérationnel à haute pression (14) et l'espace de trop-plein à basse pression (12) et la soupape de surpression (20) commutée parallèlement au restricteur (15) dépendant de la position du piston et qui ne s'ouvre qu'une fois qu'est atteinte ou dépassée une seconde différence prescrite entre son niveau haute pression associé à l'espace opérationnel à haute pression (14) et le niveau basse pression associé à l'espace de trop-plein à basse pression (12), la seconde différence de pression minimale étant supérieure à la première différence de pression minimale valable pour l'ouverture de l'au moins une soupape de précontrainte (37).

10. Unité d'amortissement à ressort selon la revendication 9,
**caractérisée en ce**
**qu'**il est prévu plusieurs soupapes de surpression autonomes (20) qui sont disposées autour du restricteur (15) dépendant de la position du piston et présentent respectivement un piston de soupape (23) guidé de manière mobile dans un guide cylindrique (22) et qui est précontraint au moyen d'un ressort à boudin (24) contre un siège (25) entourant l'embouchure (26) d'un alésage haute pression (21) communiquant avec l'espace opérationnel à haute pression (14).

11. Unité d'amortissement à ressort selon la revendication 10,
**caractérisé en ce que**
l'alésage haute pression (21) associé à l'au moins une soupape de surpression présente, au niveau de son embouchure (26) dans le guide (22), un diamètre plus réduit que sur le reste de sa longueur.

12. Unité d'amortissement à ressort selon une des revendications 9 à 11,
**caractérisé en ce**
**qu'**à l'au moins une soupape de surpression (20) est associé un alésage basse pression (27) communiquant avec l'espace de trop-plein à basse pression (12) et débouchant au niveau de la face frontale du piston de soupape associé (23) dans le guide associé (22).

13. Unité d'amortissement à ressort selon une des revendications 9 à 12,
**caractérisé en ce**
**qu'**au moins une soupape de surpression (20) est disposée dans un fond de piston (8) du piston (4) se présentant sous forme d'un piston creux.

14. Unité d'amortissement à ressort selon une des revendications 9 à 13,
**caractérisé en ce**
**que** l'au moins une soupape de surpression (20) est disposée dans une pièce rapportée centrale (29) d'un fond de piston (8).
